# EUROPEAN PATENT APPLICATION

(11) **EP 4 682 012 A1**
(43) Date of publication of application: **21.01.2026**
(21) Application number: 23958092.1
(22) Date of filing: 22.11.2023
(51) Int. Cl.: B61D 27/00

(54) **CONTROL METHOD AND APPARATUS FOR AIR CONDITIONING UNIT IN RAIL TRAIN**

(30) Priority: 06.11.2023 CN 202311464465
(71) Applicant: CRRC Changchun Railway Vehicles Co., Ltd., Changchun, Jilin 130000 (CN)
(72) Inventor: LUO, Meng, Changchun, Jilin 130000 (CN); XIA, Dongwei, Changchun, Jilin 130000 (CN); HUANG, Chuan, Changchun, Jilin 130000 (CN); LI, Changwei, Changchun, Jilin 130000 (CN)
(74) Representative: v. Bezold & Partner Patentanwälte - PartG mbB
(86) International application number: PCT/CN2023/133354
(87) International publication number: WO 2025/097491

(57) **Abstract**

The present application provides a control method and apparatus for an air conditioning unit in a rail train. The method comprises: for each air conditioning unit, acquiring return air temperature values measured by a plurality of return air temperature sensors corresponding to the air conditioning unit; on the basis of the return air temperature values measured by the return air temperature sensors, removing the return air temperature value measured by a faulty return air temperature sensor, to obtain the return air temperature values measured by a plurality of first remaining return air temperature sensors; and on the basis of the return air temperature values measured by the plurality of first remaining return air temperature sensors, removing the return air temperature value measured by a false-reporting return air temperature sensor, to obtain the return air temperature value measured by a second remaining return air temperature sensor, to adjust operation parameters of the air conditioning unit. In this way, by sequentially removing the return air temperature value measured by the faulty return air temperature sensor and the return air temperature value measured by the false-reporting return air temperature sensor, the accuracy of compartment temperature measurement can be improved, thereby improving the accuracy of control on air conditioning units.

## Description

### CROSS-REFERENCE TO RELATED APPLICATION

The present disclosure claims the priority to the Chinese patent application with the filling No. 202311464465.8 filed with the Chinese Patent Office on November 6, 2023, and entitled "CONTROL METHOD AND APPARATUS FOR AIR CONDITIONING UNIT IN RAIL TRAIN", the contents of which are incorporated herein by reference in entirety.

### TECHNICAL FIELD

The present disclosure relates to the technical field of rail transit, and in particular, to a control method and an apparatus (control device) for air conditioning units in a rail train.

### BACKGROUND ART

Existing rail trains are equipped with air conditioning units to regulate the temperature and humidity inside the carriages, so as to provide passengers with a comfortable riding experience. However, in actual operation, temperature detection results inside the carriages are often inaccurate, which affects the regulation of the temperature in the carriages, thereby resulting in inaccurate temperature control.

### SUMMARY

In view of this, the purpose of the present disclosure is to provide a control method and a control device for air conditioning units in a rail train. By sequentially removing a return air temperature value detected by a faulty return air temperature sensor and a return air temperature value detected by a false-alarm return air temperature sensor, the accuracy of temperature detection in the carriages is able to be improved, thereby improving the accuracy of controlling the air conditioning units.

An embodiment of the present disclosure provides a control method for air conditioning units in a rail train. The air conditioning units are installed in the rail train. A plurality of return air temperature sensors are installed on an inner side wall of a passenger compartment where each air conditioning unit is located. The control method comprises:
for each air conditioning unit, acquiring return air temperature values detected by the plurality of return air temperature sensors corresponding to the air conditioning unit;
determining whether a faulty return air temperature sensor exists based on a return air temperature value detected by each return air temperature sensor;
if the faulty return air temperature sensor exists, removing a return air temperature value detected by the faulty return air temperature sensor from the return air temperature values detected by the plurality of return air temperature sensors, so as to obtain return air temperature values detected by a plurality of first remaining return air temperature sensors;
determining whether a false-alarm return air temperature sensor exists based on the return air temperature values detected by the plurality of first remaining return air temperature sensors;
if the false-alarm return air temperature sensor exists, removing a return air temperature value detected by the false-alarm return air temperature sensor from the return air temperature values detected by the plurality of first remaining return air temperature sensors, so as to obtain a return air temperature value detected by a second remaining return air temperature sensor; and
regulating operating parameters of the air conditioning unit based on the return air temperature value detected by the second remaining return air temperature sensor.

Further, determining whether the faulty return air temperature sensor exists based on the return air temperature value detected by each return air temperature sensor, comprises:
if a return air temperature value detected by any return air temperature sensor exceeds a temperature range and a duration reaches a preset duration, determining the return air temperature sensor as the faulty return air temperature sensor.

Further, determining whether the false-alarm return air temperature sensor exists based on the return air temperature values detected by the plurality of first remaining return air temperature sensors, comprises:
determining an average value of the return air temperature values detected by the plurality of first remaining return air temperature sensors as an average temperature value in a carriage;
combined with a radiation effect of the sun on the rail train, screening out a first return air temperature sensor located on a light-facing side of the inner side wall of the passenger compartment and a second return air temperature sensor located on a backlight side of the inner side wall of the passenger compartment from the plurality of first remaining return air temperature sensors;
determining an absolute value of a temperature difference between a return air temperature value detected by the first return air temperature sensor and a return air temperature value detected by the second return air temperature sensor;
if the absolute value of the temperature difference is greater than a preset difference threshold, determining a first absolute value of a difference between the return air temperature value detected by the first return air temperature sensor and the average temperature value, and a second absolute value of a difference between the return air temperature value detected by the second return air temperature sensor and the average temperature value; and
comparing the first absolute value and the second absolute value;
if the first absolute value is greater than the second absolute value, determining the first return air temperature sensor as the false-alarm return air temperature sensor;
if the second absolute value is greater than the first absolute value, determining the second return air temperature sensor as the false-alarm return air temperature sensor.

Further, regulating the operating parameters of the air conditioning unit based on the return air temperature value detected by the second remaining return air temperature sensor, comprises:
regulating a working mode, an air supply volume and an air supply temperature of the air conditioning unit based on the return air temperature value detected by the second remaining return air temperature sensor and a target temperature value.

Further, a fresh air inlet of each air conditioning unit is installed with a fresh air temperature sensor. The control method further comprises:
acquiring fresh air temperature values detected by the fresh air temperature sensor of each air conditioning unit in the entire rail train;
removing a highest temperature value and a lowest temperature value from the fresh air temperature values detected by the fresh air temperature sensor of each air conditioning unit, and determining an average value of remaining temperature values as an actual fresh air temperature value; and
regulating the operating parameters of the air conditioning unit based on the return air temperature value detected by the second remaining return air temperature sensor and the actual fresh air temperature value.

An embodiment of the present disclosure further provides a control device for air conditioning units in a rail train. The air conditioning units are installed in the rail train. A plurality of return air temperature sensors are installed on an inner side wall of a passenger compartment where each air conditioning unit is located. The control device comprises:
an acquisition module, configured to acquire, for each air conditioning unit, return air temperature values detected by the plurality of return air temperature sensors corresponding to the air conditioning unit;
a fault determination module, configured to determine whether a faulty return air temperature sensor exists based on a return air temperature value detected by each return air temperature sensor;
a fault removal module, configured to, if the faulty return air temperature sensor exists, remove a return air temperature value detected by the faulty return air temperature sensor from the return air temperature values detected by the plurality of return air temperature sensors, so as to obtain return air temperature values detected by a plurality of first remaining return air temperature sensors;
a false-alarm determination module, configured to determine whether a false-alarm return air temperature sensor exists based on the return air temperature values detected by the plurality of first remaining return air temperature sensors;
a false-alarm removal module, configured to, if the false-alarm return air temperature sensor exists, remove a return air temperature value detected by the false-alarm return air temperature sensor from the return air temperature values detected by the plurality of first remaining return air temperature sensors, so as to obtain a return air temperature value detected by a second remaining return air temperature sensor; and
a regulation module, configured to regulate the operating parameters of the air conditioning unit based on the return air temperature value detected by the second remaining return air temperature sensor.

Further, in a case where the fault determination module is configured to determine whether the faulty return air temperature sensor exists based on the return air temperature value detected by each return air temperature sensor, the fault determination module is configured to:
if a return air temperature value detected by any return air temperature sensor exceeds a temperature range and a duration reaches a preset duration, determine the return air temperature sensor as the faulty return air temperature sensor.

Further, in a case where the false-alarm determination module is configured to determine whether the false-alarm return air temperature sensor exists based on the return air temperature values detected by the plurality of first remaining return air temperature sensors, the false-alarm determination module is configured to:
determine an average value of the return air temperature values detected by the plurality of first remaining return air temperature sensors as an average temperature value in a carriage;
combined with a radiation effect of the sun on the rail train, screen out a first return air temperature sensor located on a light-facing side of the inner side wall of the passenger compartment and a second return air temperature sensor located on a backlight side of the inner side wall of the passenger compartment from the plurality of first remaining return air temperature sensors;
determine a temperature difference between a return air temperature value detected by the first return air temperature sensor and a return air temperature value detected by the second return air temperature sensor;
if the temperature difference is greater than a preset difference threshold, determine a first absolute value of a difference between the return air temperature value detected by the first return air temperature sensor and the average temperature value, and a second absolute value of a difference between the return air temperature value detected by the second return air temperature sensor and the average temperature value; and
compare the first absolute value and the second absolute value;
if the first absolute value is greater than the second absolute value, determine the first return air temperature sensor as the false-alarm return air temperature sensor;
if the second absolute value is greater than the first absolute value, determine the second return air temperature sensor as the false-alarm return air temperature sensor.

An embodiment of the present disclosure further provides an electronic device. The electronic device comprises a processor, a memory, and a bus. The memory stores machine-readable instructions executable by the processor. When the electronic device is running, the processor communicates with the memory through the bus, and when the machine-readable instructions are run by the processor, the processor executes the steps of the control method for the air conditioning units in the rail train as described above.

An embodiment of the present disclosure further provides a computer-readable storage medium. A computer program is stored on the computer-readable storage medium, and when the computer program is run by a processor, the processor executes the steps of the control method for the air conditioning units in the rail train as described above.

In the control method and the control device for the air conditioning units in the rail train provided in the embodiments of the present disclosure, by sequentially removing the return air temperature value detected by the faulty return air temperature sensor and the return air temperature value detected by the false-alarm return air temperature sensor, the accuracy of temperature detection in the carriages is able to be improved, thereby improving the accuracy of controlling the air conditioning units.

To make the above objectives, features, and advantages of the present disclosure more obvious and understandable, preferred embodiments are specifically cited below, and the detailed description is made in conjunction with the drawings.

### BRIEF DESCRIPTION OF DRAWINGS

In order to illustrate the technical solutions of the embodiments of the present disclosure more clearly, the drawings that need to be used in the embodiments will be briefly introduced below. It should be understood that the following drawings only show some embodiments of the present disclosure, and therefore should not be regarded as limitation to the scope. For those ordinarily skilled in the art, other related drawings may also be obtained from these drawings without creative efforts.
FIG. 1 is a schematic diagram showing air circulation of air conditioning units in a rail train provided in an embodiment of the present disclosure;
FIG. 2 is a flowchart showing a control method for air conditioning units in a rail train provided in an embodiment of the present disclosure;
FIG. 3 is a schematic diagram showing a method for filtering temperature detection values of return air temperature sensors in an air conditioning unit provided in an embodiment of the present disclosure;
FIG. 4 is a structural schematic diagram showing a control device for air conditioning units in a rail train provided in an embodiment of the present disclosure; and
FIG. 5 is a structural schematic diagram showing an electronic device provided in an embodiment of the present disclosure.

### DETAILED DESCRIPTION OF EMBODIMENTS

In order to make the objectives, technical solutions and advantages of the embodiments of the present disclosure clearer, the technical solutions in the embodiments of the present disclosure will be clearly and completely described below with reference to the drawings in the embodiments of the present disclosure. Obviously, the embodiments described are only part of the embodiments of the present disclosure, rather than all embodiments. Components of the embodiments of the present disclosure generally described and illustrated in the drawings herein may be arranged and designed in various different configurations. Therefore, the following detailed description of the embodiments of the present disclosure provided in the drawings is not intended to limit the scope of the claimed present disclosure, but merely represents selected embodiments of the present disclosure. Based on the embodiments of the present disclosure, each other embodiment obtained by those skilled in the art without creative efforts falls within the protection scope of the present disclosure.

It is found through research that existing rail trains are equipped with air conditioning units to regulate the temperature and humidity in the carriages, so as to provide passengers with a comfortable riding experience. However, in actual operation, temperature detection results inside the carriages are often inaccurate, which affects the regulation of the temperature in the carriages, thereby resulting in inaccurate temperature control.

Based on this, the embodiments of the present disclosure provide a control method and a control device for air conditioning units in a rail train. By sequentially removing return air temperature value(s) detected by faulty return air temperature sensor(s) and return air temperature value(s) detected by false-alarm return air temperature sensor(s), the accuracy of temperature detection in the carriages is able to be improved, thereby improving the accuracy of controlling the air conditioning units.

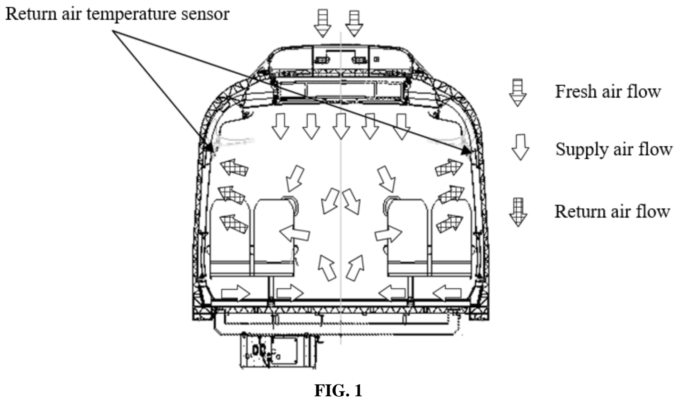

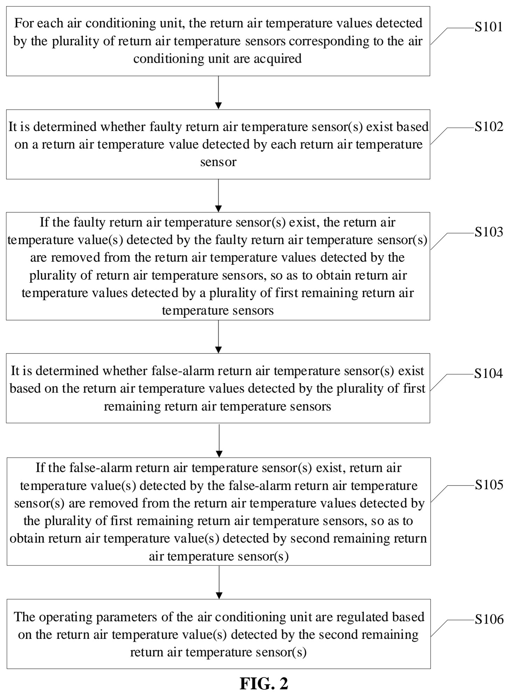

Referring to FIGS. 1 and 2, FIG. 1 is a schematic diagram showing air circulation of air conditioning units in a rail train provided in an embodiment of the present disclosure, and FIG. 2 is a flowchart showing a control method for air conditioning units in a rail train provided in an embodiment of the present disclosure. As shown in FIG. 1, air conditioning units are installed in a rail train. After entering the air conditioning units of the rail train, external fresh air is sent into passenger compartments. After passing through the passenger compartments, part of return air re-enters the air conditioning units, and is discharged to the outside of the carriages. A plurality of return air temperature sensors are installed on an inner side wall of a passenger compartment where each air conditioning unit is located. The return air temperature sensors are used for detecting return air temperature values to reflect the temperature of the passenger compartment in real time, so as to regulate the air conditioning units. As shown in FIG. 2, the control method provided in the embodiment of the present disclosure includes S101-S106.

In S101, for each air conditioning unit, the return air temperature values detected by the plurality of return air temperature sensors corresponding to the air conditioning unit are acquired.

The control method provided in the embodiment of the present disclosure may be applied to a controller of the air conditioning unit. The controller is communicatively connected to the plurality of return air temperature sensors to acquire the return air temperature values detected by the return air temperature sensors. Here, considering a light-facing side and a backlight side of the rail train under an effect of solar radiation, the plurality of return air temperature sensors may be arranged on two sides of an inner side wall of the passenger compartment where the air conditioning unit is located. For example, each carriage is provided with two air conditioning units, and left and right sides of an inner side wall of each air conditioning unit are each provided with one return air temperature sensor, totaling 4 return air temperature sensors.

In S102, it is determined whether faulty return air temperature sensor(s) exist based on a return air temperature value detected by each return air temperature sensor.

In this step, when a return air temperature value detected by a certain return air temperature sensor obviously deviates from a normal range, e.g., exceeds a self-range (such as - 40 degrees Celsius to 70 degrees Celsius) of the temperature sensor and lasts for a period of time, it is determined that this return air temperature sensor is faulty.

In specific implementation, step S102 may include: if a return air temperature value detected by any return air temperature sensor exceeds a temperature range and a duration reaches a preset duration (e.g., 5 seconds), this return air temperature sensor is determined to be a faulty return air temperature sensor.

In S103, if the faulty return air temperature sensor(s) exist, the return air temperature value(s) detected by the faulty return air temperature sensor(s) are removed from the return air temperature values detected by the plurality of return air temperature sensors, so as to obtain return air temperature values detected by a plurality of first remaining return air temperature sensors.

Here, if the faulty return air temperature sensor(s) exist, the return air temperature value(s) detected by the faulty return air temperature sensor(s) are removed from the return air temperature values detected by the plurality of return air temperature sensors to obtain the return air temperature values detected by the plurality of first remaining return air temperature sensors, so as to eliminate an influence of incorrect temperature data detected by the faulty return air temperature sensor(s).

If no faulty return air temperature sensor exists, the plurality of return air temperature sensors may be directly determined as the first remaining return air temperature sensors for subsequent calculation.

In S104, it is determined whether false-alarm return air temperature sensor(s) exist based on the return air temperature values detected by the plurality of first remaining return air temperature sensors.

Here, different from the case that the temperature value exceeds the range when a fault occurs, during a false alarm, a detection result of a return air temperature sensor has a certain deviation, but is still within the range. In this case, an average temperature of the carriage may be determined by the return air temperature values detected by the plurality of first remaining return air temperature sensors, and then temperature value(s) that deviate more from the average temperature of the carriage are removed.

In a possible implementation, step S103 may include the following steps.

An average value of the return air temperature values detected by the plurality of first remaining return air temperature sensors is determined as the average temperature value in the carriage. Combined with the radiation effect of the sun on the rail train, a first return air temperature sensor located on the light-facing side of the inner side wall of the passenger compartment and a second return air temperature sensor located on the backlight side of the inner side wall of the passenger compartment are screened out from the plurality of first remaining return air temperature sensors. A temperature difference between a return air temperature value detected by the first return air temperature sensor and a return air temperature value detected by the second return air temperature sensor is determined. If the temperature difference is greater than a preset difference threshold, a first absolute value of a difference between the return air temperature value detected by the first return air temperature sensor and the average temperature value and a second absolute value of a difference between the return air temperature value detected by the second return air temperature sensor and the average temperature value are determined. The first absolute value and the second absolute value are compared. If the first absolute value is greater than the second absolute value, the first return air temperature sensor is determined as a false-alarm return air temperature sensor. If the second absolute value is greater than the first absolute value, the second return air temperature sensor is determined as a false-alarm return air temperature sensor.

Here, the average temperature value in the carriage may be used as a reference value for subsequent temperature comparison. The radiation effect of the sun on the rail train may be comprehensively determined by combining the running direction and time of the train, and then the first return air temperature sensor located on the light-facing side of the inner side wall of the passenger compartment and the second return air temperature sensor located on the backlight side of the inner side wall of the passenger compartment are screened out, and the absolute value of the temperature difference between them is determined. If the absolute value of the temperature difference is less than or equal to the preset difference threshold (e.g., 8 degrees Celsius), it indicates that no false alarm exists in both the first return air temperature sensor and the second return air temperature sensor. If the absolute value of the temperature difference is greater than the preset difference threshold (e.g., 8 degrees Celsius), the first absolute value of the difference between the return air temperature value detected by the first return air temperature sensor and the average temperature value and the second absolute value of the difference between the return air temperature value detected by the second return air temperature sensor and the average temperature value are compared. That is, a return air temperature sensor that deviates more from the average temperature value is determined as a false-alarm return air temperature sensor.

Further, in specific implementation, it is possible to choose to count a certain period of time after the air conditioning unit is turned on and perform the determination of fault and false alarm after closing the door of the carriage, so as to improve the accuracy of determination.

In S105, if the false-alarm return air temperature sensor(s) exist, return air temperature value(s) detected by the false-alarm return air temperature sensor(s) are removed from the return air temperature values detected by the plurality of first remaining return air temperature sensors, so as to obtain return air temperature value(s) detected by second remaining return air temperature sensor(s).

Similarly, if the false-alarm return air temperature sensor(s) exist, the return air temperature value(s) detected by the false-alarm return air temperature sensor(s) are removed from the return air temperature values detected by the plurality of first remaining return air temperature sensors to obtain the return air temperature value(s) detected by the second remaining return air temperature sensor(s), so as to eliminate an influence of incorrect temperature data detected by the false-alarm return air temperature sensor(s).

If no false-alarm return air temperature sensor exists, all the first remaining return air temperature sensors may be directly determined as the second remaining return air temperature sensors. That is, it is considered that the return air temperature values detected by all the first remaining return air temperature sensors are accurate and may be used for subsequent calculations. Then, the return air temperature value may be obtained by means of averaging, etc., so as to regulate operating parameters of the air conditioning unit.

In S106, the operating parameters of the air conditioning unit are regulated based on the return air temperature value(s) detected by the second remaining return air temperature sensor(s).

In this step, a target temperature value refers to a temperature value that the return air is expected to reach after the regulation of the air conditioning unit. The working mode, air supply volume and air supply temperature of the air conditioning unit may be regulated based on the return air temperature value(s) detected by the second remaining return air temperature sensor(s) and the target temperature value. There may be one ore more second remaining return air temperature sensors. In a case where there are a plurality of second remaining return air temperature sensors, the operating parameters of the air conditioning unit may be regulated based on an average value of the return air temperature values detected by the plurality of second remaining return air temperature sensors and the target temperature value.

More specifically, by comparing the return air temperature value with the target temperature value, a correct control instruction may be output to regulate the working mode (such as ventilation, cooling, heating, etc.), the air supply volume and the air supply temperature of the air conditioning unit. The target temperature may be calculated by a formula (may be calculated based on the fresh air temperature, different fresh air temperatures correspond to different target temperatures, which is automatically realized by software) or set manually. By comparing the return air temperature with the target temperature (the return air temperature is considered to reflect the temperature inside the carriage), when the return air temperature value is lower than the target temperature value, there is a demand for heating; when the return air temperature value is higher than the target temperature value, there is a demand for cooling.

Further, a fresh air inlet of each air conditioning unit is installed with a fresh air temperature sensor. For example, in a four-car rail train, each carriage has 2 air conditioning units, so that there are a total of 2 * 4 = 8 fresh air temperature sensors in the entire rail train. Considering that an external environment of the train detected by the fresh air temperature sensor is relatively stable, when determining fresh air temperature values, maximum and minimum values may be generally removed, and then an average value is taken to avoid an influence of incorrect fresh air temperature detection data.

In specific implementation, the fresh air temperature values detected by the fresh air temperature sensor of each air conditioning unit in the entire rail train are acquired. Highest and lowest temperature values are removed from the fresh air temperature values detected by the fresh air temperature sensor of each air conditioning unit, and the average value of the remaining temperature values is determined as an actual fresh air temperature value. The operating parameters of the air conditioning unit are regulated based on the return air temperature value(s) detected by the second remaining return air temperature sensor(s), the actual fresh air temperature value (and the target temperature value).

Further, an air supply temperature sensor when the return air and the fresh air are mixed for air supply may also be combined to participate in the control of the air conditioning unit, for example, the air supply temperature is regulated by regulating a mixing ratio of the return air and the fresh air.

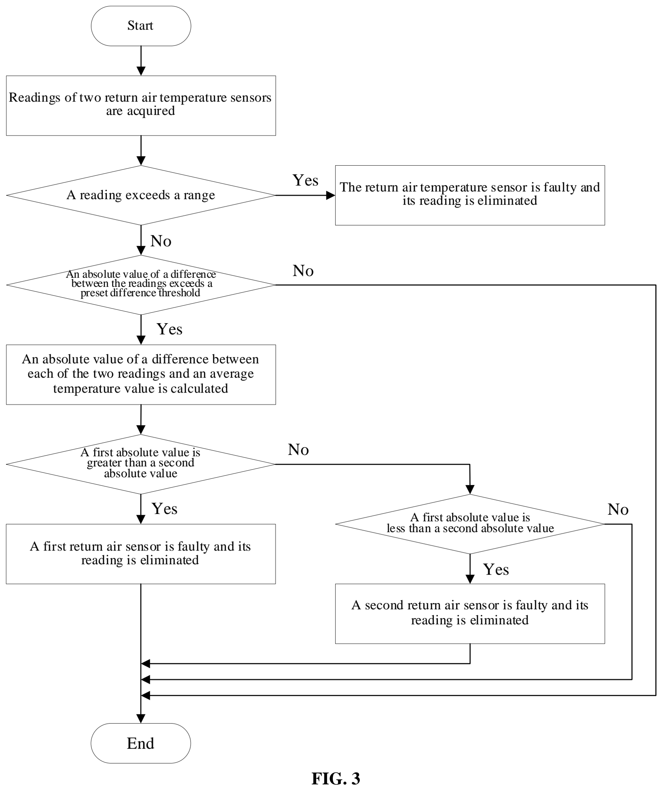

Referring to FIG. 3, FIG. 3 is a schematic diagram showing a method for filtering temperature detection values of return air temperature sensors in an air conditioning unit provided in another embodiment of the present disclosure. As shown in FIG. 3, the method provided in the embodiment of the present disclosure includes the following steps.

Readings of the two return air temperature sensors on the light-facing side and the backlight side are respectively acquired. It is determined whether each reading exceeds the range. If a reading of a return air temperature sensor exceeds the range, it is determined that the return air temperature sensor is faulty and its reading is eliminated. If none of the readings of the return air temperature sensors exceeds the range, it is determined whether an absolute value of a difference between the two readings exceeds a preset difference threshold (such as 8 degrees Celsius). If not, it indicates that there is no false alarm in the return air temperature sensors; if yes, an absolute value of a difference between the reading and the average temperature value in the carriage is determined, and the average temperature value in the carriage is an average value of the readings of the return air temperature sensors. A return air temperature sensor with a larger absolute value, that is, which deviates more from a second threshold, is determined as a false-alarm one, and its reading is eliminated.

In this way, an influence of fault and false alarm of the return air temperature sensor on the train temperature regulation may be avoided, so that the accuracy of carriage temperature detection is able to be improved, thereby improving the accuracy of controlling the air conditioning unit. In particular, it avoids a situation in summer and winter where the air conditioning system does not work due to faults and false alarms, resulting in stuffiness or cold in the carriage, which is unbearable for passengers.

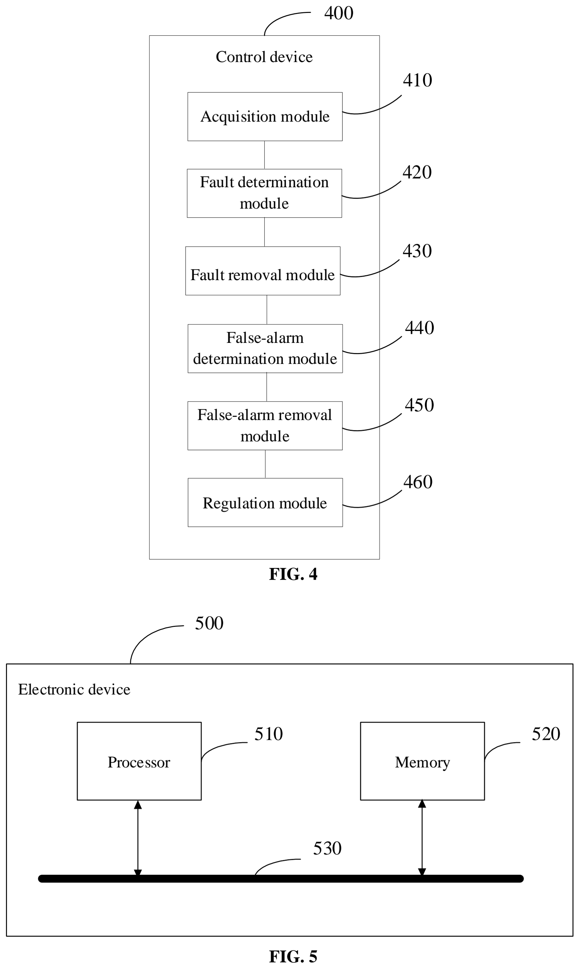

Referring to FIG. 4, FIG. 4 is a structural schematic diagram showing a control device for air conditioning units in a rail train provided in an embodiment of the present disclosure. Air conditioning units are installed in the rail train. A plurality of return air temperature sensors are installed on an inner side wall of a passenger compartment where each air conditioning unit is located. As shown in FIG. 4, the control device 400 includes:
an acquisition module 410, configured to acquire, for each air conditioning unit, return air temperature values detected by the plurality of return air temperature sensors corresponding to the air conditioning unit;
a fault determination module 420, configured to determine whether faulty return air temperature sensor(s) exist based on a return air temperature value detected by each return air temperature sensor;
a fault removal module 430, configured to, if the faulty return air temperature sensor(s) exist, remove return air temperature value(s) detected by the faulty return air temperature sensor(s) from the return air temperature values detected by the plurality of return air temperature sensors, so as to obtain return air temperature values detected by a plurality of first remaining return air temperature sensors;
a false-alarm determination module 440, configured to determine whether false-alarm return air temperature sensor(s) exist based on the return air temperature values detected by the plurality of first remaining return air temperature sensors;
a false-alarm removal module 450, configured to, if the false-alarm return air temperature sensor(s) exist, remove return air temperature value(s) detected by the false-alarm return air temperature sensor(s) from the return air temperature values detected by the plurality of first remaining return air temperature sensors, so as to obtain return air temperature value(s) detected by second remaining return air temperature sensor(s); and
a regulation module 460, configured to regulate the operating parameters of the air conditioning unit based on the return air temperature value(s) detected by the second remaining return air temperature sensor(s).

Further, when the fault determination module 420 is configured to determine whether the faulty return air temperature sensor(s) exist based on the return air temperature value detected by each return air temperature sensor, the fault determination module 420 is configured to:
if a return air temperature value detected by any return air temperature sensor exceeds a temperature range and a duration reaches a preset duration, determine this return air temperature sensor as a faulty return air temperature sensor.

Further, when the false-alarm determination module 440 is configured to determine whether the false-alarm return air temperature sensor(s) exist based on the return air temperature values detected by the plurality of first remaining return air temperature sensors, the false-alarm determination module 440 is configured to:
determine an average value of the return air temperature values detected by the plurality of first remaining return air temperature sensors as an average temperature value in the carriage;
combined with the radiation effect of the sun on the rail train, screen out a first return air temperature sensor located on a light-facing side of an inner side wall of the passenger compartment and a second return air temperature sensor located on a backlight side of the inner side wall of the passenger compartment from the plurality of first remaining return air temperature sensors;
determine a temperature difference between a return air temperature value detected by the first return air temperature sensor and a return air temperature value detected by the second return air temperature sensor;
if the temperature difference is greater than a preset difference threshold, determine a first absolute value of a difference between the return air temperature value detected by the first return air temperature sensor and the average temperature value, and a second absolute value of a difference between the return air temperature value detected by the second return air temperature sensor and the average temperature value; and
compare the first absolute value and the second absolute value;
   if the first absolute value is greater than the second absolute value, determine the first return air temperature sensor as a false-alarm return air temperature sensor;
   if the second absolute value is greater than the first absolute value, determine the second return air temperature sensor as a false-alarm return air temperature sensor.

Referring to FIG. 5, FIG. 5 is a structural schematic diagram showing an electronic device provided in an embodiment of the present disclosure. As shown in FIG. 5, the electronic device 500 includes a processor 510, a memory 520, and a bus 530.

The memory 520 stores machine-readable instructions executable by the processor 510. When the electronic device 500 operates, the processor 510 communicates with the memory 520 through the bus 530. When the machine-readable instructions are executed by the processor 510, the processor 510 may execute the steps of the control method for the air conditioning units in the rail train in the method embodiments as shown in FIG. 1 above. For specific implementation, reference may be made to the method embodiments, which will not be repeated here.

An embodiment of the present disclosure further provides a computer-readable storage medium, on which a computer program is stored. When the computer program is run by a processor, the processor may execute the steps of the control method for the air conditioning units in the rail train in the method embodiments as shown in FIG. 1 above. For specific implementation, reference may be made to the method embodiments, which will not be repeated here.

Those skilled in the art can clearly understand that for the convenience and conciseness of description, the specific working processes of the above-described system, device, and unit may refer to the corresponding processes in the foregoing method embodiments, and will not be repeated here.

In the several embodiments provided in the present disclosure, it should be understood that the disclosed system, device, and method may be implemented in other ways. The device embodiments described above are only illustrative. For example, the division of the unit is only a logical function division, and there may be other division methods in actual implementation. For another example, a plurality of units or components may be combined or integrated into another system, or some features may be ignored or not implemented. In addition, the displayed or discussed mutual coupling or direct coupling or communication connection may be achieved through some communication interfaces, indirect coupling or communication connection of devices or units, and can be in electrical, mechanical or other forms.

The units described as separate components may or may not be physically separated, and the components displayed as units may or may not be physical units, that is, they may be located in one place, or may be distributed on a plurality of network units. Some or all of the units may be selected according to actual needs to achieve the purpose of the solutions of the present embodiments.

In addition, the functional units in the embodiments of the present disclosure may be integrated into one processing unit, or each unit may exist alone physically, or two or more units may be integrated into one unit.

If the functions are implemented in the form of software functional units and sold or used as independent products, they may be stored in a non-volatile computer-readable storage medium executable by a processor. Based on this understanding, the essence of the technical solutions of the present disclosure, or the part that contributes to the prior art, or part of the technical solutions, may be embodied in the form of a software product. The computer software product is stored in a storage medium, including several instructions to make a computer device (which may be a personal computer, a server, or a network device, etc.) execute all or part of the steps of the methods described in the embodiments of the present disclosure. The foregoing storage media include a U disk, a mobile hard disk, a read-only memory (ROM), a random access memory (RAM), a magnetic disk, or an optical disk and other media that may store program codes.

Finally, it should be noted that the above embodiments are only specific implementations of the present disclosure, for illustrating the technical solutions of the present disclosure, rather than limiting them. The protection scope of the present disclosure is not limited thereto. Although the present disclosure is described in detail with reference to the foregoing embodiments, those of ordinary skill in the art should understand that within the technical scope disclosed in the present disclosure, any person familiar with the technical field can still modify the technical solutions described in the foregoing embodiments, or easily think of changes, or equivalently replace some of the technical features. These modifications, changes, or replacements do not make the essence of the corresponding technical solutions deviate from the spirit and scope of the technical solutions of the embodiments of the present disclosure, and should all be included in the protection scope of the present disclosure. Therefore, the protection scope of the present disclosure should be subject to the protection scope of the claims.

## Claims

1. A control method for air conditioning units in a rail train, **characterized in that** the air conditioning units are installed in the rail train; a plurality of return air temperature sensors are installed on an inner side wall of a passenger compartment where each air conditioning unit is located; the control method comprises:
for each air conditioning unit, acquiring return air temperature values detected by the plurality of return air temperature sensors corresponding to the air conditioning unit;
determining whether a faulty return air temperature sensor exists based on a return air temperature value detected by each return air temperature sensor;
when the faulty return air temperature sensor exists, removing a return air temperature value detected by the faulty return air temperature sensor from the return air temperature values detected by the plurality of return air temperature sensors, so as to obtain return air temperature values detected by a plurality of first remaining return air temperature sensors;
determining whether a false-alarm return air temperature sensor exists based on the return air temperature values detected by the plurality of first remaining return air temperature sensors;
when the false-alarm return air temperature sensor exists, removing a return air temperature value detected by the false-alarm return air temperature sensor from the return air temperature values detected by the plurality of first remaining return air temperature sensors, so as to obtain a return air temperature value detected by a second remaining return air temperature sensor; and
regulating operating parameters of the air conditioning unit based on the return air temperature value detected by the second remaining return air temperature sensor.

2. The control method according to claim 1, wherein determining whether the faulty return air temperature sensor exists based on the return air temperature value detected by each return air temperature sensor comprises:
when a return air temperature value detected by any return air temperature sensor exceeds a temperature range and a duration reaches a preset duration, determining the return air temperature sensor as the faulty return air temperature sensor.

3. The control method according to claim 1, wherein determining whether the false-alarm return air temperature sensor exists based on the return air temperature values detected by the plurality of first remaining return air temperature sensors comprises:
determining an average value of the return air temperature values detected by the plurality of first remaining return air temperature sensors as an average temperature value in a carriage;
combined with a radiation effect of the sun on the rail train, screening out a first return air temperature sensor located on a light-facing side of the inner side wall of the passenger compartment and a second return air temperature sensor located on a backlight side of the inner side wall of the passenger compartment from the plurality of first remaining return air temperature sensors;
determining an absolute value of a temperature difference between a return air temperature value detected by the first return air temperature sensor and a return air temperature value detected by the second return air temperature sensor;
when the absolute value of the temperature difference is greater than a preset difference threshold, determining a first absolute value of a difference between the return air temperature value detected by the first return air temperature sensor and the average temperature value, and a second absolute value of a difference between the return air temperature value detected by the second return air temperature sensor and the average temperature value; and
comparing the first absolute value and the second absolute value;
when the first absolute value is greater than the second absolute value, determining the first return air temperature sensor as the false-alarm return air temperature sensor;
when the second absolute value is greater than the first absolute value, determining the second return air temperature sensor as the false-alarm return air temperature sensor.

4. The control method according to claim 1, wherein regulating the operating parameters of the air conditioning unit based on the return air temperature value detected by the second remaining return air temperature sensor comprises:
regulating a working mode, an air supply volume and an air supply temperature of the air conditioning unit based on the return air temperature value detected by the second remaining return air temperature sensor and a target temperature value.

5. The control method according to claim 1, wherein a fresh air inlet of each air conditioning unit is installed with a fresh air temperature sensor; the control method further comprises:
acquiring fresh air temperature values detected by the fresh air temperature sensor of each air conditioning unit in the entire rail train;
removing a highest temperature value and a lowest temperature value from the fresh air temperature values detected by the fresh air temperature sensor of each air conditioning unit, and determining an average value of remaining temperature values as an actual fresh air temperature value; and
regulating the operating parameters of the air conditioning unit based on the return air temperature value detected by the second remaining return air temperature sensor and the actual fresh air temperature value.

6. A control device for air conditioning units in a rail train, **characterized in that** the air conditioning units are installed in the rail train; a plurality of return air temperature sensors are installed on an inner side wall of a passenger compartment where each air conditioning unit is located; the control device comprises:
an acquisition module, configured to acquire, for each air conditioning unit, return air temperature values detected by the plurality of return air temperature sensors corresponding to the air conditioning unit;
a fault determination module, configured to determine whether a faulty return air temperature sensor exists based on a return air temperature value detected by each return air temperature sensor;
a fault removal module, configured to, when the faulty return air temperature sensor exists, remove a return air temperature value detected by the faulty return air temperature sensor from the return air temperature values detected by the plurality of return air temperature sensors, so as to obtain return air temperature values detected by a plurality of first remaining return air temperature sensors;
a false-alarm determination module, configured to determine whether a false-alarm return air temperature sensor exists based on the return air temperature values detected by the plurality of first remaining return air temperature sensors;
a false-alarm removal module, configured to, when the false-alarm return air temperature sensor exists, remove a return air temperature value detected by the false-alarm return air temperature sensor from the return air temperature values detected by the plurality of first remaining return air temperature sensors, so as to obtain a return air temperature value detected by a second remaining return air temperature sensor; and
a regulation module, configured to regulate operating parameters of the air conditioning unit based on the return air temperature value detected by the second remaining return air temperature sensor.

7. The control device according to claim 6, wherein in a case where the fault determination module is configured to determine whether the faulty return air temperature sensor exists based on the return air temperature value detected by each return air temperature sensor, the fault determination module is configured to:
when a return air temperature value detected by any return air temperature sensor exceeds a temperature range and a duration reaches a preset duration, determine the return air temperature sensor as the faulty return air temperature sensor.

8. The control device according to claim 6, wherein in a case where the false-alarm determination module is configured to determine whether the false-alarm return air temperature sensor exists based on the return air temperature values detected by the plurality of first remaining return air temperature sensors, the false-alarm determination module is configured to:
determine an average value of the return air temperature values detected by the plurality of first remaining return air temperature sensors as an average temperature value in a carriage;
combined with a radiation effect of the sun on the rail train, screen out a first return air temperature sensor located on a light-facing side of the inner side wall of the passenger compartment and a second return air temperature sensor located on a backlight side of the inner side wall of the passenger compartment from the plurality of first remaining return air temperature sensors;
determine a temperature difference between a return air temperature value detected by the first return air temperature sensor and a return air temperature value detected by the second return air temperature sensor;
when the temperature difference is greater than a preset difference threshold, determine a first absolute value of a difference between the return air temperature value detected by the first return air temperature sensor and the average temperature value, and a second absolute value of a difference between the return air temperature value detected by the second return air temperature sensor and the average temperature value; and
compare the first absolute value and the second absolute value;
when the first absolute value is greater than the second absolute value, determine the first return air temperature sensor as the false-alarm return air temperature sensor;
when the second absolute value is greater than the first absolute value, determine the second return air temperature sensor as the false-alarm return air temperature sensor.

9. An electronic device, **characterized by** comprising a processor, a memory, and a bus, wherein the memory stores machine-readable instructions executable by the processor, when the electronic device is running, the processor communicates with the memory through the bus, and when the machine-readable instructions are run by the processor, the processor executes the steps of the control method for the air conditioning units in the rail train according to any one of claims 1 to 5.

10. A computer-readable storage medium, **characterized in that** a computer program is stored on the computer-readable storage medium, and when the computer program is run by a processor, the processor executes the steps of the control method for the air conditioning units in the rail train according to any one of claims 1 to 5.
